Europäisches Patentamt

(19) European Patent Office

Office européen des brevets

(11) Publication number : **0 318 462 B1**

(12) **EUROPEAN PATENT SPECIFICATION**

(45) Date of publication of patent specification :
23.10.91 Bulletin 91/43

(51) Int. Cl.⁵ : **F01N 3/02, F01N 3/28**

(21) Application number : **89100288.3**

(22) Date of filing : **13.08.85**

(54) Exhaust processor.

(30) Priority : **13.08.84 US 639803**

(43) Date of publication of application :
**31.05.89 Bulletin 89/22**

(60) Publication number of the earlier application in
accordance with Art. 76 EPC : **0 174 742**

(45) Publication of the grant of the patent :
**23.10.91 Bulletin 91/43**

(84) Designated Contracting States :
**BE DE FR GB IT NL SE**

(56) References cited :
**DE-A- 2 417 435**
**FR-A- 1 257 056**
**US-A- 3 879 944**
**US-A- 4 175 107**

(73) Proprietor : **ARVIN INDUSTRIES, INC.**
**1531 E. Thirteenth Street**
**Columbus Indiana 47201 (US)**

(72) Inventor : **Scheitlin, George E.**
**3843 W. North Wood Lake Drive**
**Columbus Indiana 47201 (US)**
Inventor : **Sickels, Mark A.**
**1073 Erin Apt. A**
**Columbus Indiana 47201 (US)**
Inventor : **Usleman, Robert T.**
**5472 E. Karlsway**
**Columbus Indiana 47201 (US)**

(74) Representative : **Frost, Dennis Thomas et al**
**WITHERS & ROGERS 4 Dyer's Buildings**
**Holborn**
**London, EC1N 2JT (GB)**

EP 0 318 462 B1

## Description

This invention relates to exhaust processors usable to filter particulate matter from a contaminated fluid. More particularly, this invention relates to an "in-line" exhaust processor assembly including a processor housing and a pair of substrates mounted in series within the housing for solid particle filtration.

Conventional exhaust processors include a housing in communication with an exhaust manifold of an engine and a single monolithic substrate disposed therein to filter out noxious pollutants from the engine exhaust gases. However, in many cases a single substrate cannot provide a sufficient amount of filtering capacity. Typically, when more than one filter is needed, two substrates are mounted within a housing in a "side-by-side" or "spaced-apart parallel" relation. Hereinafter, such a conventional processor will be referred to as a "parallel processor."

Many types of parallel processors are known. One type includes a single inlet pipe that is coupled to two filters mounted in parallel by means of a "Y-design" three-way joint. A separate sheet metal housing having its own inlet and outlet ports is provided to house each of said filters. Another type includes a web-shaped common inlet cone that is coupled directly to two filters mounted in parallel. Each filter is provided with its own sheet metal housing. However, the web-shaped inlet cone is of sufficient size to contemporaneously engage the inlet ends of each of the parallel filters.

Manufacturers and users of exhaust processors such as catalytic converters and diesel particulate traps will appreciate the hardships and inconveniences generally associated with the design and installation of all types of conventional parallel processors. One problem relates to inadequate conservation of heat energy. For example, parallel exhaust processors comprising a pair of diesel particulate traps typically cause large quantities of heat energy to be wasted during "regeneration" of the traps. The filter elements or traps must periodically be cleaned to restore functionality thereto. Heat is applied to each trap to burn and oxidize the trapped carbon particles. In a diesel particulate trap of parallel construction, the heat energy required to "clean" each filter element must be conducted to the inlet face of each filter element by a pipe system. Thus, a complex, space-consuming, dual, heat delivery network of pipes and fixtures must be provided for each parallel "trap" processor. A large amount of the heat energy generated during such a regeneration burn is lost as waste exhaust heat that is discharged to the atmosphere. Another problem is that parallel processors are oftentimes not conveniently usable in confined spaces due to their large, unwieldy size and great bulk.

It is known to provide a processor housing having two substrates mounted in an "in-line" or "series" configuration rather than the parallel configuration described above in an attempt to avoid the shortcomings associated with conventional parallel processors. However, known "in-line" processors have proven to be unsatisfactory substitutes for conventional parallel processors. One type of conventional inline processor is provided with a single, long, narrow substrate. It will be appreciated that it is best to construct a substrate using a ceramic material and that it is desirable, for purposes of strengh, to keep the outside diameter to length ratio of a ceramic substrate as near to 1.0 as possible. A long narrow substrate is inherently characterized by an unacceptably high ratio and is quite fragile.

Another type of conventional in-line processor is provided with two shorter filters mounted in series within a single passageway in which all the contaminated exhaust gas introduced into the housing is required to pass. It will be understood that one or both of these substrates can be prematurely clogged with particulate matter unless the "filter efficiency" of each of these in-line substrate filters is carefully "matched". Design and maintenance of this second type of conventional in-line processor is undesirably complicated by the need to install a less efficient filter in the forward or upstream position within the housing and a filter characterized by a higher efficiency in the rearward or downstream position within the housing. Selection of properly "matched" filters is an expensive and time consuming procedure.

Another type of in-line processor is disclosed in DE-A-2417435 and comprises a first annular substrate extending across the inlet of the processor housing and having a central unobstructed passage through which a portion of the exhaust gases pass direct from the inlet to a second substrate which is of less diameter than the housing to provide an annular passage for the gases which have been filtered by the first substrate to pass direct to the outlet. Each substrate thus filters a portion of the gas stream which has not been filtered by the other.

Yet another type of in-line processor in which the first annular substrate is of annular form with a central passage through which a portion of the exhaust gases pass, untreated, to the second substrate is disclosed in US-A-4175107. In this case, however, the second substrate is positioned to receive and treat all the combustion product entering the housing inlet.

According to the present invention an exhaust processor assembly comprising a housing including an inlet for introducing a combustion product into the housing and an outlet for exhausting combustion product from the housing, the first substrate means situated in a forward position within the housing for receiving and treating a portion of the combustion product, second substrate means, situated in a rearward position within the housing for receiving and treating all of the combustion product, and bypass means for diverting a portion of the combustion product past the first substrate means to the second substrate means for treatment therein, whereby said diverted portion of the combustion product is intercepted and treated by only the second substrate means prior to being exhausted from the housing through the outlet, is characterized in that the first and second substrate means each consists of a monolithic element having an outer boundary defining an internal region for receiving and treating the combustion product and said bypass means includes a passageway between the outer boundary of the first substrate means and an interior wall of the housing.

The housing is desirably of 'clam shell' construction although it is within the scope of the present invention to employ a 'stuffed-can' construction. The housing preferably includes a first clam shell portion and a complementary second clam shell portion joined to the first clam shell portion to surround and hold the substrate pair in series.

Installation of the bypass means within an exhaust processor of in-line construction serves to allocate combustion product among the two substrates in substantially equal quantities. This feature advantageously permits installation of two substrates having substantially equivalent 'filter efficiencies' since each deployed substrate is exposed to roughly the same volume of contaminated fluid or combustion product.

The 'diverted' portion of the untreated combustion product is routed directly to the second or downstream substrate and thus entirely bypasses the first or upstream substrate. In addition, the remaining 'undiverted' combustion product is routed directly to the first substrate.

According to a preferred embodiment of the present invention, the bypass means includes a partition member or internal shell that is installed in an upstream position extending along only about one-half of the housing to divide the axially forward portion of the housing interior into separate first and second passageways. The first substrate is desirably mounted in the first passageway in proximity to the housing inlet. Thus, the first passageway defines one path for conducting undiverted combustion product to the first substrate for treatment therein and for subsequent exhaustion to the second substrate for treatment therein prior to exhaustion from the housing. In addition, the second passageway defines another path for conducting diverted combustion product directly to the second substrate for treatment therein prior to exhaustion from the housing.

One feature of the present invention is the provision in an "in-line" exhaust processor of bypass means for diverting a selected quantity of untreated combustion product to the second substrate for treatment therein. This novel structure causes the flow of combustion product introduced into the processor to be split into substantially equivalent portions. In effect, one-half of the initially untreated combustion product is allocated and conducted to the first substrate for filtration therein, and the other one-half of the untreated combustion product is allocated and conducted to the second substrate for filtration therein. The present invention advantageously permits installation of two conventionally sized substrates having substantially equivalent filter efficiencies within a compact exhaust processor assembly of "in-line" construction.

In this specification and in the claims, the words "an exhaust processor" are intended to refer to various types of catalytic converters and processors, diesel particulate filters, and other particulate traps in connection with which the invention may be used.

The invention can best be understood by referring to the following description and accompanying drawings which illustrate preferred embodiments exemplifying the best mode of carrying out the invention as presently perceived.

Fig. 1 is a view of a longitudinal cross section of an in-line exhaust processor incorporating one of the preferred embodiments of the present invention with portions broken away ;

Fig 2 is an exploded view of the embodiment of Fig. 1 showing the clam shell housing and a single interior shell.

Fig. 3 is a view of a "downstream" transverse cross section of the embodiment shown in Fig. 1, taken along lines 3-3 of Fig. 1 ;

Fig 4 is a view of an "upstream" transverse cross section of the embodiment shown in Fig. 1, taken along lines 4-4 of Fig. 1 ;

Fig. 5 is a view of a longitudinal cross section of an in-line exhaust processor incorporating another of the preferred embodiments of the present invention with portions broken away ;

Fig. 6 is an exploded view of the embodiment of Fig. 5 showing the clam shell housing and a pair of interior shells in confronting relation ;

Fig. 7 is a view of a "downstream" transverse cross section of the embodiment shown in Fig. 5, taken along lines 7-7 of Fig. 5 ; and

Fig. 8 is a view of an "upstream" transverse cross section of the embodiment shown in Fig. 5, taken along lines 8-8 of Fig. 5.

An exhaust processor assembly 10 of the present invention includes a housing 12 of the clam shell type including an upper half shell 14 and a lower half shell 16. Shell halves 14, 16 are conventionally steel stampings. In final assembly, halves 14, 16 are welded or otherwise joined along shell flanges 18.

The housing 12 further includes a housing inlet 20 to receive a combustion product 21 of an engine (not shown) into a cavity 22 formed by the marriage of the upper and lower half shells 14, 16. Also, a housing outlet 24 is provided to exhaust combustion product from the housing 12.

First and second substrates 26 and 28, respectively, are disposed within the cavity 22 of the housing 12 in a manner to be described. Each substrate is a cylindrically-shaped monolithic cellular structure of conventional diameter and length. The substrate could be a structure having a large number of thin-walled passages 29 extending radially and longitudinally between the ends of the cellular structure.

It will be understood that the cellular structure could alternatively be of the type used in a diesel particulate trap without departing from the scope of the present invention. Further, the "filter efficiency" of each of substrates 26, 28 is substantially equivalent, in contradistinction to conventional in-line exhaust processors which inherently must use two substrates having different "filter efficiencies". One significant advantage of the present invention is that a pair of substrates of conventional size and of similar efficiency are usable in a compact in-line exhaust processor.

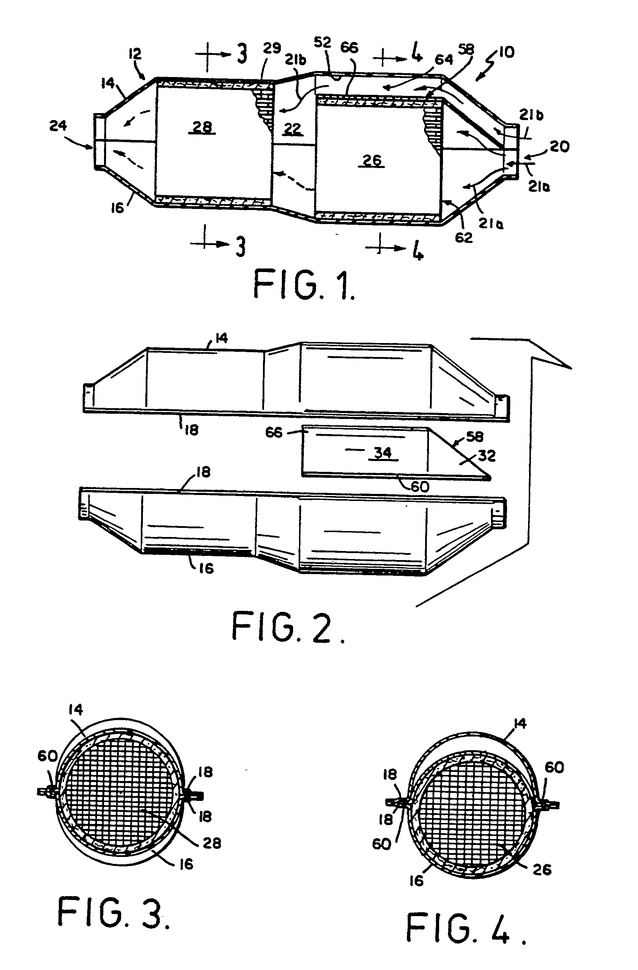

In the embodiment of Figs. 1-4, the exhaust processor 10 includes a partition 58 in the form of an internal shell half 58 which includes an inlet cone section 32 and a first body section 34. Inlet cone section 32 operates to divert approximately one-half of the incoming combustion product 21 to the second substrate 28 so as to wholly bypass the first substrate 26. Internal shell half 58 includes peripheral flanges 60 so as to be rigidly fixable between shell halves 14 and 16.

The first and second substrates 26, 28 are positioned within housing 12 in end-to-end substantially coaxial relation in this embodiment by placing the first substrate 26 in a first passageway 62 between the internal shell half 58 and the lower shell half 16, and by placing the second substrate 28 between shell halves 14 and 16 as shown best in Fig. 1. The substrates 26, 28 are mounted in their proper positions using any conventional technique.

In the embodiment of Figs. 1 to 4, the second substrate 28 is exposed to the filtered combustion product 21a exhausted from the first substrate 26, in addition to the untreated combustion product 21b which is conducted to the second substrate 28 through a second passageway 64. This second passageway 64 is defined by inwardly facing surface 52 and the outwardly-facing surface 66 of internal shell half 58 and causes combustion product portion 21b to wholly bypass the first substrate 26.

In operation of the embodiment of Figs. 1 to 4, about one-half of the combustion product 21a is filtered by the first substrate 26 while the entire flow of combustion product 21a, 21b is intercepted and filtered by the second substrate 28. One advantage of this feature is that provision of the bypass means guarantees that the in-line exhaust processor of the present invention can continue to use two substantially similar substrates of the same filter efficiency. Another advantage of this feature is that it aids in conserving heat during incineration of trapped solid particles within the substrate. During regeneration of a particulate trap, heat energy waste will be significantly minimized since heat applied to the first substrate 26 will pass through said substrate 26 to aid in the regeneration of the axially adjacent second substrate 28 whereas in conventional processors the heat energy applied to the first substrate 26 is merely discharged to the atmosphere.

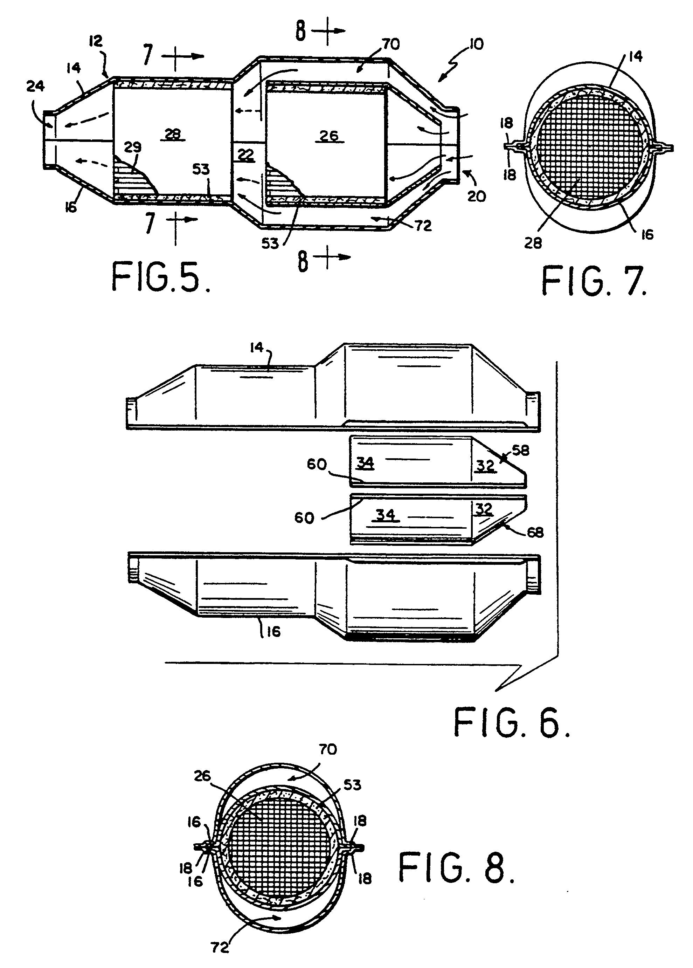

In the embodiment of the invention illustrated in Figs 5 to 8, those elements numbered identically with the embodiment of Figs 1-4 perform the same or similar functions. In the embodiment of Figs. 5 to 8 a companion internal shell half 68 is installed in the housing 12 in confronting relation to the internal shell half 58. Thus installed, second passageway 64 is divided into upper and lower components 70, 72 and is shaped to resemble an oblong annular ring as best shown in Figs. 7 and 8, rather than the arcute crescent section(s) of the embodiment of Figs 1-4 shown in Figs. 3 and 4.

Thus, a dual bypass passage 70, 72 is provided around the first substrate 26. One effect of such a feature is that the lower bypass passage 72 and the upper bypass passage 70 each operate to conduct about one-quarter of the combustion product 21 introduced into the housing 12 through the housing inlet 20.

## Claims

1. An exhaust processor assembly (10) comprising a housing (12) including an inlet (20) for introducing a combustion product (21) into the housing and an outlet (24) for exhausting combustion product from the housing, first substrate means (26) situated in a forward position within the housing for receiving and treating a portion (21a) of the combustion product (21), second substrate means (28), situated in a rearward position within the housing for receiving and treating all of the combustion product (21), and bypass means for diverting a portion (21b) of the combustion product (21) past the first substrate means (26) to the second substrate means (28) for treatment therein, whereby said diverted portion (21b) of the combustion product (21) is intercepted and treated by only the second substrate means (28) prior to being exhausted from the housing through the outlet (24), characterised in that the first and second substrate means (26, 28) each consists of a monolithic element having an outer boundary defining an internal region for receiving and treating the combustion product (21) and said bypass means includes a passageway (64, 70, 72) between the outer boundary of the first substrate means (26) and an interior wall (52) of the housing.

2. The processor of claim 1, wherein the housing further includes a first clam shell portion (16) and a complementary second clam shell portion (14) joined to the first clam shell portion to surround the first and second substrate means (26, 28).

3. The processor of claim 2, wherein the bypass means includes partition means (58) for dividing the interior of an axially forward portion of the housing (12) into a first passageway (62) for conducting the undiverted combustion product portions (21a) and a second passageway (64) for conducting the diverting combustion product portion (21b), the partition means being rigidly fixed to the housing to cause one mouth of each passageway to be in communication with the housing inlet (20) and the other mouth of each passageway to be in communication with the inlet end of the structure of the second substrate means (28) such that the undiverted combustion product portion conducted through the first passageway is sequentially introduced into the first and the second substrate means (26, 28) for treatment therein and the diverted combustion product portion conducted through the second passageway bypasses the first substrate means and is introduced only into the second substrate means for treatment therein.

4. The processor of claim 3, wherein the partition means (58) includes a shell half which includes a body section (34) for receiving a portion of the first substrate structure (26) therein and an inlet cone section (32) for conducting combustion product from the housing inlet (20) to the substrate structure received in the body section (34).

5. The processor of claim 4, wherein the shell half section (58) is formed to include a receptacle having an open mouth, and the shell half is rigidly fixed to the housing (12) to cause its mouth to open toward the first clam shell portion (16) and its inlet cone section (32) tobe in communication with the housing inlet (20).

6. The processor of claim 4 or 5, further comprising first means for mounting the structure of the first substrate means (26) to the shell half (58) and to the first clam shell portion (16) to be suspended in the first passageway (62) and second means for mounting the structure of the second substrate means (28) to the first and second clam shell portions (16, 14) to be in communication with both of the first and second passageways (62, 64).

7. The processor of any one of claims 4 to 6, wherein the inlet cone section (32) of the shell half (58) includes forward edge means for interrupting the flow of combustion product introduced into the housing through the housing inlet (20) to segregate the undiverted and diverted portions (21a, 21b) of the combustion product, the forward edge means and the first clam shell portion (16) cooperate to define the inlet mouth of the first passageway (62) through which the undiverted combustion product (21a) is conducted, and the forward edge means and the second clam shell portion (14) cooperate to define the inlet mouth of the second passageway (64) through which the diverted combustion product (21b) is conducted.

8. The processor of claim 1, wherein the bypass means includes a first shell half (58) and a complementary second shell half (68), each shell half including a body section (34) for receiving a portion of the first substrate structure (26) therein and an inlet cone section (32) for conducting combustion product from the housing inlet (20) to the substrate structure received therein.

9. The processor of claim 8, wherein each body section (34) is formed to include an open mouth, the first shell half (58) is rigidly fixed to the housing (12) to cause its mouth to open toward the first clam shell portion (16), the second shell half (68) is rigidly fixed to the housing (12) to cause its mouth to open toward its companion second clam shell portion (14) so that the two shell halves are held in confronting relation.

10. The processor of claim 9, further comprising first means for mounting the structure of the first substrate means (26) to the rigidly fixed shell halves (58, 68) to be suspended in the first passageway (70, 72) and second means for mounting the structure of the second substrate means (28) to the first and second clam shell portions (16, 14) to be in communication with both the first passageway (70, 72) and the outlet of the first substrate means (26).

11. The processor of any of claims 4 to 11, wherein the first clam shell portion (16) and the second clam shell portion (14) each includes a flange (18), the partition member (58, 68) includes a flange (60) and the flanges (18, 60) cooperate to define a single split line extending along the axially forward portion of the processor (10) between the housing inlet (20) and the outlet of the first substrate means (26).

**Patentansprüche**

1. Abgasaufbereiter-Anordnung (10)
— mit einem Gehäuse (12), welches einen Einlaß (20) zum Einführen eines Verbrennungsprodukts (21) in das Gehäuse und einen Auslaß (24) zum Abführen von Verbrennungsprodukt aus dem Gehäuse aufweist,
— mit einer ersten Substrateinrichtung (26), die in einer vorderen Position in dem Gehäuse für die Aufnahme und Behandlung eines Teils (21a) des Verbrennungsprodukts (21) angeordnet ist,
— mit einer zweiten Substrateinrichtung (28), die in einer hinteren Position in dem Gehäuse für die Aufnahme und Behandlung des gesamten Verbrennungsprodukts (21) angeordnet ist, und
— mit einer Bypasseinrichtung zum Abzweigen eines Teils (21b) des Verbrennungsprodukts (21) an der ersten Substrateinrichtung (26) vorbei zur zweiten Substrateinrichtung (28) für die Behandlung darin,

— wodurch der abgezweigte Teil (21b) des Verbrennungsprodukts (21) nur von der zweiten Substrateinrichtung (28) aufgefangen und durch sie behandelt wird, bevor er aus dem Gehäuse durch den Auslaß (24) abgeführt wird, dadurch gekennzeichnet,

— daß die erste und zweite Substrateinrichtung (26, 28) jeweils aus einem monolithischen Element bestehen, das eine äußere Begrenzung hat, welche einen internen Bereich für die Aufnahme und Behandlung des Verbrennungsprodukts (21) bildet, und

— daß die Bypasseinrichtung einen Kanal (64, 70, 72) zwischen der äußeren Begrenzung der ersten Substrateinrichtung (26) und einer Innenwand (52) des Gehäuses aufweist.

2. Aufbereiter nach Anspruch 1, bei welchem das Gehäuse weiterhin einen ersten Muschelschalenabschnitt (16) und einen komplementären zweiten Muschelschalenabschnitt (14) aufweist, der mit dem ersten Muschelschalenabschnitt verbunden ist, um die erste und zweite Substrateinrichtung (26, 28) zu umfassen.

3. Aufbereiter nach Anspruch 2, bei welchem die Bypasseinrichtung eine Trenneinrichtung (58) zum Teilen des Innenraums eines axial vorderen Abschnitts des Gehäuses (12) in einen ersten Kanal (62) zum Leiten der unverzweigten Verbrennungsproduktteile (21a) und einen zweiten Kanal (64) zum Leiten des abgezweigten Verbrennungsproduktteils (21b) aufweist, wobei die Trenneinrichtung starr an dem Gehäuse festgelegt ist, um die eine Mündung eines jeden Kanals dazu zu bringen, in Verbindung mit dem Gehäuseeinlaß (20) zu stehen und die andere Mündung jedes Kanals zu veranlassen, in Verbindung mit dem Einlaßende des Aufbaus der zweiten Substrateinrichtung (28) derart zustehen, daß der unverzweigte Verbrennungsproduktteil, der durch den ersten Kanal geleitet wird, nacheinander in die erste und die zweite Substrateinrichtung (26, 28) für eine Behandlung darin eingeführt wird, und der abgezweigte Verbrennungsproduktteil, der durch den zweiten Kanal geleitet wird, die erste Substrateinrichtung umgeht und nur in die zweite Substrateinrichtung für eine Behandlung darin eingeführt wird.

4. Aufbereiter nach Anspruch 3, bei welchem die Trenneinrichtung (58) eine Schalenhälfte aufweist, die einen Körperabschnitt (34) für die Aufnahme eines Abschnitts des ersten Substrataufbaus (26) in ihm und einen Einlaßkonusabschnitt (32) zum Leiten von Verbrennungsprodukt aus dem Gehäuseeinlaß (20) zu dem Substrataufbau aufweist, der in dem Körperabschnitt (34) aufgenommen ist.

5. Aufbereiter nach Anspruch 4, bei welchem der Schalenhalbabschnitt (58) gebildet wird, um ein Behältnis einzuschließen, das eine offene Mündung hat, und die Schalenhälfte starr an dem Gehäust (12) festgelegt ist, um seine Mündung zu veranlassen, zu dem ersten Muschelschalenabschnitt (16) hin zu münden, und seinen Einlaßkonusabschnitt (32) dazu zu bringen, in Verbindung mit dem Gehäuseeinlaß (20) zu stehen.

6. Aufbereiter nach Anspruch 4 oder 5, welcher weiterhin eine erste Einrichtung zum Anbringen des Aufbaus der ersten Substrateinrichtung (26) an der Schalenhälfte (58) und an dem ersten Muschelschalenabschnitt (16) für die Aufhängung in dem ersten Kanal (62) und eine zweite Einrichtung zum Anbringen des Aufbaus der zweiten Substrateinrichtung (28) an dem ersten und zweiten Muschelschalenabschnitt (16, 14) für die Herstellung einer Verbindung sowohl mit dem ersten als auch mit dem zweiten Kanal (62, 64) aufweist.

7. Aufbereiter nach einem der Ansprüche 4 bis 6, bei welchem der Einlaßkonusabschnitt (32) der Schalenhälfte (58) eine vordere Randeinrichtung für die Unterbrechung des Stroms des Verbrennungsprodukts aufweist, der in das Gehäuse durch den Gehäuseeinlaß (20) eingeführt wird, um den unverzweigten und abgezweigten Teil (21a, 21b) des Verbrennungsprodukts zu trennen, die vordere Randeinrichtung und der erste Muschelschalenabschnitt (16) so zusammenwirken, daß die Einlaßmündung des ersten Kanals (62) gebildet wird, durch welchen das unverzweigte Verbrennungsprodukt (21a) geleitet wird, und die vordere Randeinrichtung und der zweite Muschelschalenabschnitt (14) so zusammenwirken, daß die Einlaßmündung des zweiten Kanals (64) gebildet wird, durch welchen das abgezweigte Verbrennungsprodukt (21b) geleitet wird.

8. Aufbereiter nach Anspruch 1, bei welchem die Bypasseinrichtung eine erste Schalenhälfte (58) und eine komplementäre zweite Schalenhälfte (68) aufweist, wobei jede Schalenhälfte einen Körperabschnitt (34) für die Aufnahme eines Abschnitts des ersten Substrataufbaus (26) in ihm und einen Einlaßkonusabschnitt (32) zum Leiten von Verbrennungsprodukt aus dem Gehauseeinlaß (20) zu dem darin aufgenommenen Substrataufbau aufweist.

9. Aufbereiter nach Anspruch 8, bei welchem jeder Körperabschnitt (34) so gebaut ist, daß er eine offene Mündung aufweist, die erste Schalenhälfe (58) starr an dem Gehäuse (12) festgelegt ist, um ihre Mündung zu veranlassen, zum ersten Muschelschalenabschnitt (16) zu münden, und die zweite Schalenhälfte (68) starr an dem Gehäuse (12) befestigt ist, um ihre Mündung zu veranlassen, zu seinem das Gegenstück bildenden zweiten Muschelschalenabschnitt (14) zu münden, sodaß die beiden Schalenhälften in gegenüberstehender Beziehung gehalten sind.

10. Aufbereiter nach Anspruch 9, welcher weiterhin eine erste Einrichtung zum Anbringen des Aufbaus der ersten Substrateinrichtung (26) an den starr festgelegten Schalenhälften (58, 68) für eine Aufhängung in dem ersten Kanal (70, 72) und eine zweite Einrichtung zum Anbringen des Aufbaus der zweiten Substrateinrichtung (28) an dem ersten und zweiten Muschelschalenabschnitt (16, 14) für die Herstellung einer Verbindung sowohl mit dem ersten Kanal (70, 72) als auch mit dem Auslaß der ersten Substrateinrichtung (26) aufweist.

11. Aufbereiter nach einem der Ansprüche 4 bis 11, bei welchem der erste Muschelschalenabschnitt (16) und der zweite Muschelschalenabschnitt (14) jeweils einen Flansch (18) aufweisen, das Trennelement (58, 68) einen Flansch (60) aufweist und die Flansche (18, 60) so zusammenwirken, daß eine einzige Trennlinie gebildet wird, die sich längs des axial vorderen Abschnitts des Aufbereiters (10) zwischen dem Gehäuseeinlaß (20) und dem Auslaß der ersten Substrateinrichtung (26) erstreckt.

## Revendications

1. Ensemble d'épuration de gaz d'échappement (10) comportant un boîtier (12) avec une entrée (20) pour l'introduction d'un produit de combustion (21) à l'intérieur du boîtier et une sortie (24) pour la sortie du produit de combustion à partir du boîtier, un premier moyen formant substrat (26) situé dans une position située à l'avant à l'intérieur du boîtier pour recevoir et traiter une partie (21a) du produit de combustion (21), un second moyen formant substrat (28) situé dans une position arrière à l'intérieur du boîtier pour recevoir et traiter tout le produit de combustion (21) et des moyens formant dérivation pour dériver une partie (21b) du produit de combustion (21) au-delà du premier moyen formant substrat (26) vers le second moyen formant substrat (28) pour traitement dans ce dernier, de sorte que ladite partie dérivée (21b) du produit de combustion (21) soit interceptée et traitée seulement par le second moyen formant substrat (28) avant d'être évacuée à partir du boîtier par la sortie (24), caractérisé en ce que le premier et le second moyens formant substrat (26, 28) consistent chacun en un élément monolithique ayant une frontière extérieure définissant une région interne pour recevoir et traiter le produit de combustion (21) et ledit moyen formant dérivation comporte un passage (64, 70, 72) entre la frontière extérieure du premier moyen formant substrat (26) et une paroi interne (52) du boîtier.

2. Epurateur selon la revendication 1 dans lequel le boîtier comporte en outre une première partie formant coquille (16) et une seconde partie formant coquille complémentaire (14) reliée à la première partie formant coquille pour entourer les premier et second moyens formant substrat (26, 28).

3. Epurateur selon la revendication 2 dans lequel le moyen de dérivation comporte un moyen formant cloison (58) pour diviser l'intérieur d'une partie située axialement vers l'avant du boîtier (12) en un premier passage (62) pour conduire les parties de produit de combustion qui n'ont pas été dérivées (21a) et un second passage (64) pour conduire la partie de produit de combustion qui a été dérivée (21b), le moyen formant cloison étant fixé de façon rigide au boîtier pour qu'une embouchure de chaque passage se trouve en communication avec l'entrée du boîtier (20) et l'autre embouchure de chaque passage se trouve en communication avec l'extrémité d'entrée de la structure du second moyen formant substrat (28) de telle sorte que la partie de produit de combustion non dérivée conduite à travers le premier passage se trouve introduite de façon séquentielle à l'intérieur des premier et second moyens formant substrat (26, 28) pour se trouver traitée dans ces derniers et la partie de produit de combustion dérivée conduite à travers le second passage contourne le premier moyen foramnt substrat et se trouve introduite seulement dans le second moyen formant substrat pour traitement dans ce dernier.

4. Epurateur selon la revendication 3 dans lequel le moyen formant cloison (58) comporte une demi coquille qui inclue une partie formant corps (34) pour recevoir une partie de la première structure de substrat (26) et une section formant cône d'entrée (32) pour conduire le produit de combustion à partir de l'entrée du boîtier (20) vers la structure de substrat reçue dans la partie formant corps (34).

5. Epurateur selon la revendication 4 dans lequel la partie formant demi-coquille (58) est réalisée de façon à comporter un réceptacle ayant une embouchure ouverte et la demi-coquille est fixée de façon rigide au boîtier (12) pour que son embouchure s'ouvre vers la première partie formant coquille (16) et que sa partie formant cône d'entrée (32) soit en communication avec l'entrée du boîtier (20).

6. Epurateur selon la revendication 4 ou la revendication 5 comportant en outre un premier moyen pour monter la structure du premier moyen foramnt substrat (26) sur la demi-coquille (58) et sur la première partie formant coquille (16) de façon à être suspendu dans le premier passage (62) et un second moyen pour monter la structure du second moyen formant substrat (28) sur la première et la seconde parties formant coquilles (16, 14) de façon à être en communication avec les deux premier et second passages (62, 64).

7. Epurateur selon l'une quelconque des revendications 4 à 6 dans lequel la section de cône d'entrée (32) de la demi-coquille (58) comporte un moyen formant bord avant pour interrompre l'écoulement du produit de combustion introduit à l'intérieur du boîtier à travers l'entrée du boîtier (20) pour séparer les parties non dérivées et dérivées (21a, 21b) du produit de combustion, le moyen formant bord avant et la première partie de coquille (16) coopèrent pour définir l'embouchure d'entrée du premier passage (62) à travers lequel le produit de combustion non dérivé (21a) est conduit et le moyen formant bord arrière et la seconde partie de coquille (14) coopèrent pour définir l'embouchure d'entrée du second passage (64) à travers lequel le produit de combustion dérivé (21b) est conduit.

8. Epurateur selon la revendication 1 dans lequel le moyen formant dérivation comporte une première demi-coquille (58) et une seconde demi-coquille complémentaire (68), chaque demi-coquille comportant une partie formant corps (34) prévue pour recevoir une partie de la première structure de substrat (26) et une section de cône d'entrée (32) pour conduire le produit de combustion à partir de l'entrée du boîtier (20) vers la structure de substrat reçue dans ce dernier.

9. Epurateur selon la revendication 8 dans lequel chaque partie de corps (34) est réalisée de façon à comporter une embouchure ouverte, la première demi-coquille (58) est fixée de façon rigide au boîtier (12) de façon à ce que son embouchure s'ouvre vers la première partie formant coquille (16), la seconde moitié de coquille (68) est fixée de façon rigide au boîtier (12) pour amener son embouchure à s'ouvrir vers la deuxième partie de coquille qui lui est associée (14) de telle sorte que les deux demi coquilles sont maintenues face à face.

10. Epurateur selon la revendication 9 comportant en outre un premier moyen pour monter la structure du premier moyen formant substrat (26) sur les demi-coquilles fixées de façon rigide (58, 68) de façon à être suspendues dans le premier passage (70, 72) et un second moyen pour monter la structure du second moyen formant substrat (28) sur les première et seconde parties (16, 14) de façon à réaliser une communication à la fois avec le premier passage (70, 72) et avec la sortie du premier moyen formant substrat (26).

11. Epurateur selon l'une quelconque des revendications 4 à 11 dans lequel la première partie formant coquille (16) et la seconde partie formant coquille (14) comportent chacune une bride (18), l'élément formant cloison (58, 68) comporte une bride (60) et les brides (18, 60) coopèrent de façon à définir une ligne unique de division s'étendant selon la partie située axialement à l'avant de l'épurateur (10) entre l'entrée du boîtier (20) et la sortie du premier moyen formant substrat (26).

FIG. 1.

FIG. 2.

FIG. 3.

FIG. 4.

FIG.5.

FIG. 7.

FIG. 6.

FIG. 8.